Europäisches Patentamt

European Patent Office

Office européen des brevets

(11) Publication number: **0 096 146**
**A1**

# (12) EUROPEAN PATENT APPLICATION

(21) Application number: 82850127.0

(22) Date of filing: 09.06.82

(51) Int. Cl.³: **A 01 G 23/08**

(43) Date of publication of application:
21.12.83 Bulletin 83/51

(84) Designated Contracting States:
AT BE CH DE FR GB IT LI NL SE

(71) Applicant: Persson, Erik
Postlada 1496
S-935 00 Norsjö(SE)

(72) Inventor: Persson, Erik
Postlada 1496
S-935 00 Norsjö(SE)

(74) Representative: Onn, Thorsten et al,
AB STOCKHOLMS PATENTBYRA Box 3129
S-103 62 Stockholm(SE)

(54) Grapple harvester.

(57) A felling and processing unit comprising cross-cutting members for felling and cross-cutting trees, delimbing members for delimbing felled trees, driven feed rolls for advancing felled trees through the unit, and suspension means for suspending the unit on the boom of a vehicle mounted crane via a hinge means permitting rotation of the unit in relation to the crane boom. At least the delimbing members (9) are arranged as grapple members for fixing the unit on a tree to be felled, whereas the unit is pivotal relative to said suspension means (3) about a substantially horizontal axle (5) to follow along with the tree at its felling.

FIG.1

Croydon Printing Company Ltd

EP 0 096 146 A1

## Grapple harvester

This invention relates to a felling and processing unit,which comprises cross-cutting members for felling and cross-cutting trees, limbing members for limbing felled trees, driven feed rolls for feeding a felled tree through the unit for processing the tree, and suspension means for suspending the unit hingedly on a forest crane boom.

Felling units suspended on a forest crane boom, and also processing units are known previously. Heretofore, however, one has not succeeded in producing a combined felling and processing unit, which suspended on a crane boom renders it possible to fell and process trees in a sequence, and which permits maximum utilization of the reach of conventional forest cranes which normally is about 10 m. Experiments carried out for producing such a unit only have resulted in constructions, which are much too heavy for the forest cranes normally employed for felling units, grapples a.s.o., and which by their weight would substantially limit the reach of the crane. This has been deemed unacceptable, especially for thinning units for which, instead, the greatest possible reach is desired.

The present invention, therefore, has the object to produce a grapple harvester to be suspended on a forest crane, more precisely a felling and processing unit of simple construction and designed so as suspended on a forest crane boom to render possible the felling and processing of trees, and the weight of which is so low that the entire reach of the forest crane can be utilized efficiently. This object is achieved in that the unit according to the invention has been given the characterizing features defined in the claims.

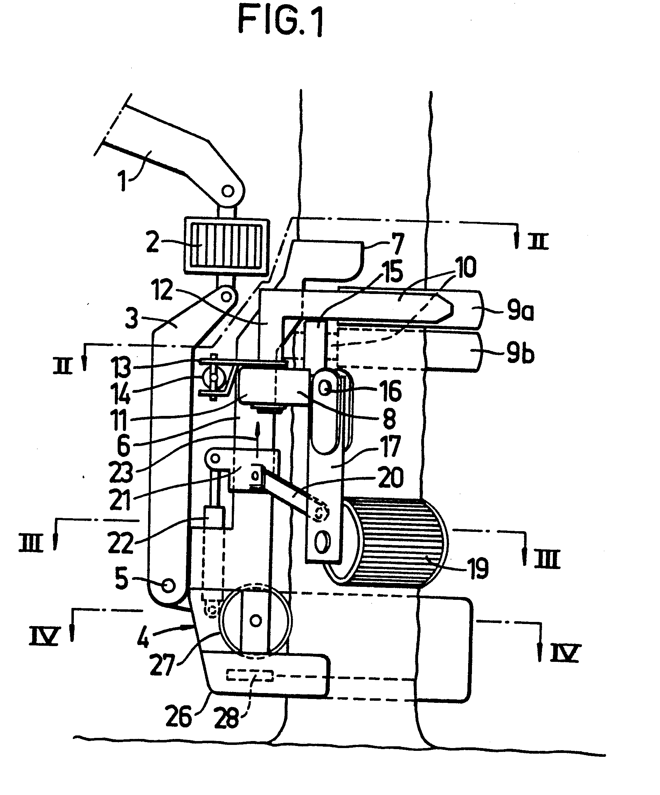

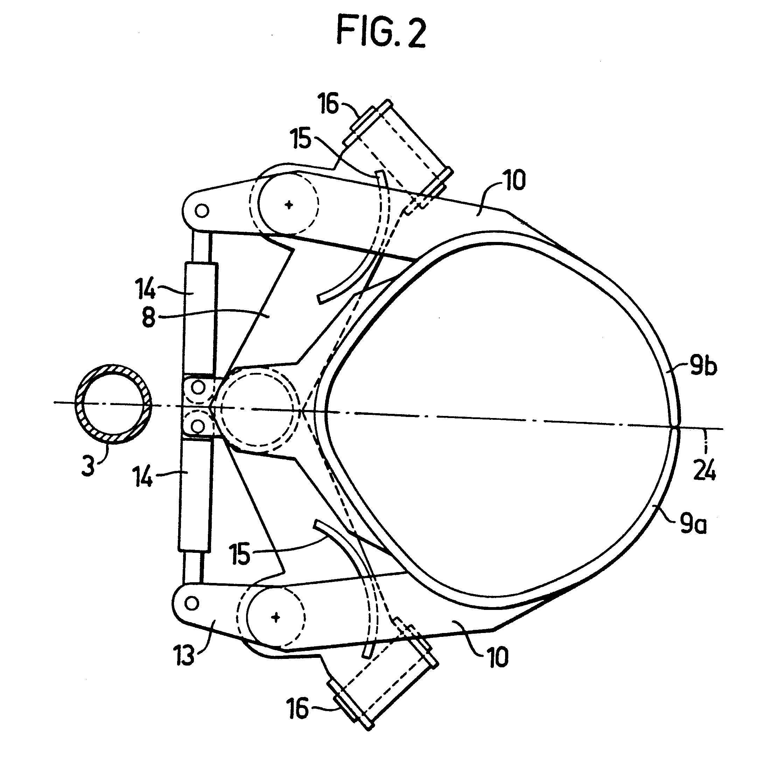

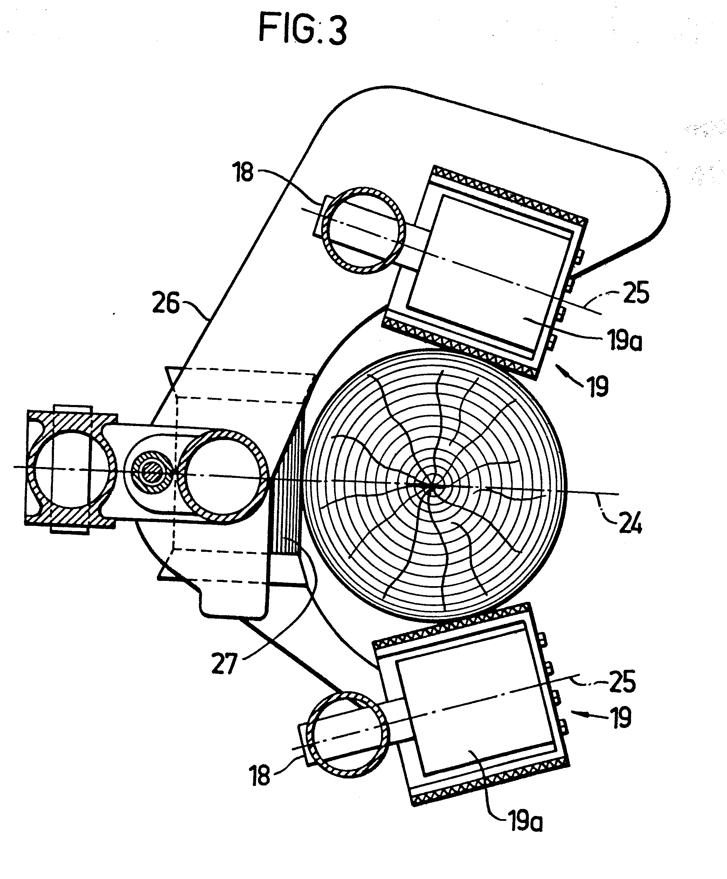

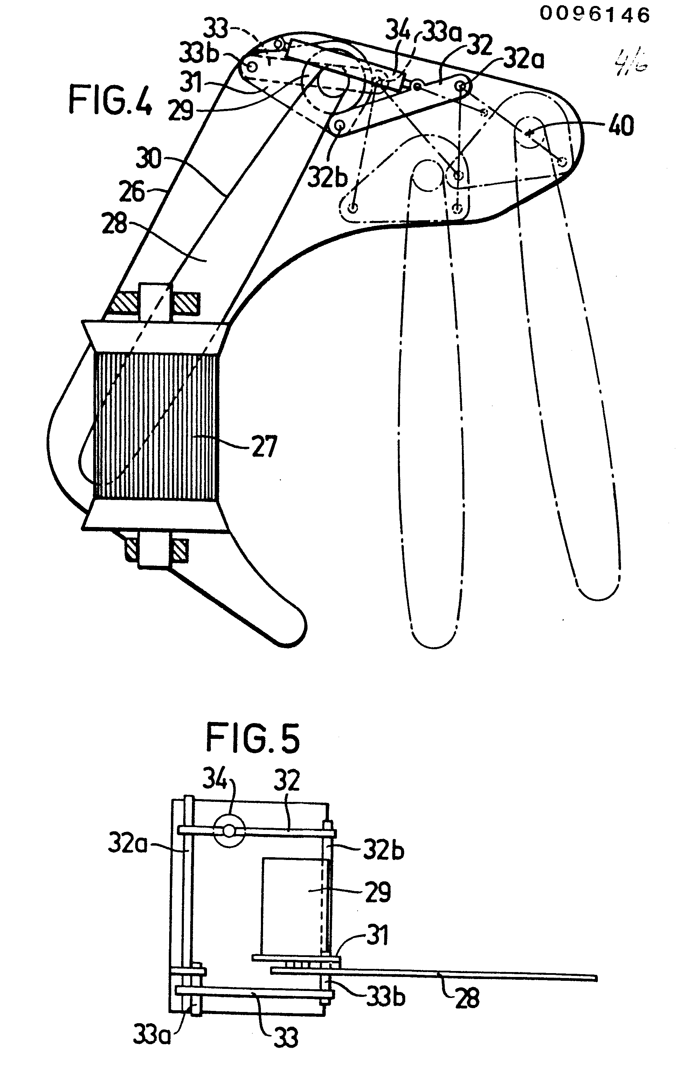

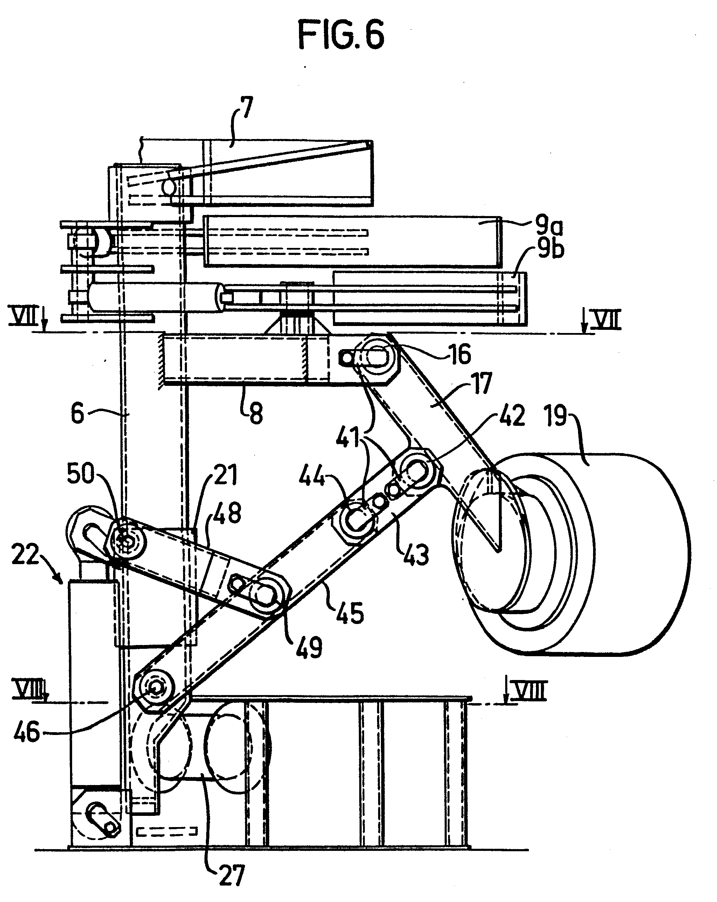

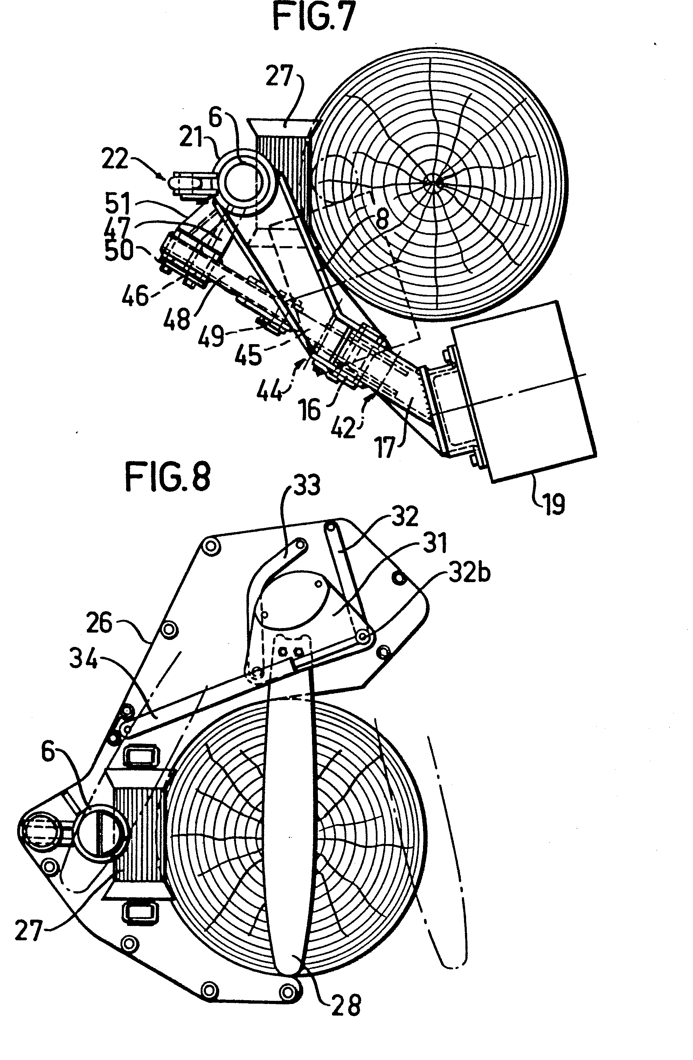

The invention is described in greater detail in the following, with reference to the accompanying drawings, in which Fig. 1 is a lateral view of a combined felling and processing unit according to the invention applied about a tree and in position for felling the same, Fig. 2 is on an enlarged scale a section substantially along the line II-II in Fig.
1, Fig. 3 is a section substantially along the line III-III
in Fig. 1, Fig. 4 is a section substantially along the line
IV-IV in Fig. 1, Fig. 5 is a schematic view illustrating
the suspension of the cross-cutting member shown in Fig. 4
seen from the side, Fig. 6 is a lateral view of a unit according to the invention which is provided with a modified
embodiment of the suspension means of the feed rolls, Fig.7
is a section substantially along the line VII-VII in Fig. 6,
and Fig. 8 is a section substantially along the line VIII-
VIII in Fig. 6 and illustrates a slightly modified embodiment
of the mechanism for the feeding movement of the cross-cutting member.

The combined felling and processing unit or the grapple harvester according to the present invention is intended to be
carried by a forest crane mounted on a vehicle and is shown
in Fig. 1 hingedly suspended at the end of a forest crane
boom, of which only a portion is shown, via a hydraulically
operated rotator 2 for rotating the felling and processing
unit relative to the boom 1. At other embodiments, however,
this rotator 2 can be replaced by another link or hinge connection, which permits rotation of the unit relative to the
boom 1.

The felling and processing unit comprises a suspension arm
3, which at one end is hingedly connected to the rotator 2
and at its other end is hingedly connected to the body 4 of
the felling and processing unit by means of a hinge 5, which
permits the body 4 to pivot at least through $90^{\circ}$ and prefer-
ably more than $180^{\circ}$ in relation to the suspension arm 3, and
which preferably should be located closer to the body end
facing to the ground than to the other end of the body, in
the starting or felling position shown in Fig. 1. For returning the unit to said felling position after it had been pivoted outward from the suspension arm 3, i.e. after the felling and processing of a tree, springs (not shown in detail
in the drawings) are provided which may be torsion springs
in the hinge 5 and/or tension springs attached between the suspension arm 3 and body 4. The spring force in the outward pivoted position of the body is adjusted so that the springs are capable to return the unit to the felling position only when the unit is not loaded, i.e. when it does not carry any tree material.

The body 4 consists of a centrally located hollow beam 6, at the upper portion of which, i.e. the portion remote from the ground, a stationary, substantially flat V-shaped limbing knife 7 is exchangeably attached. Connected to the hollow beam 6 and laterally projecting therefrom are frame beams 8, at which movable limbing knives 9 are arranged in different planes between the stationary limbing knife 7 and the frame beams 8. The upper movable limbing knife is designated in Fig. 1 by 9a, and the lower one by 9b. The movable limbing knives 9, more precisely, are attached exchangeably each on a carrier arm 10, which are connected to or formed with an axle 12 rotatably supported in a bearing holder 13 on the frame beam 8. A swinging arm 13 formed at one end as a fork is connected non-rotary to each axle 12 and projects in a direction opposed to the carrying arm 10. Between the swinging arm 13 and the hollow beam 6, for every movable limbing knife 9 a hydraulic cylinder 14 is provided for operating the respective movable limbing knife 9. The movable limbing knives 9 also act as grapple members, which subsequent to the application of the unit to the tree to be felled are capable to grab about the tree and thereby draw the unit to the tree in question. The carrier arms 10 supporting the limbing knives 9 rest slidably against supports 15, which are arranged on the upper surface of the frame beam and located between the respective limbing knife 9 and the bearing point of its carrier arm and relatively close to the end of the respective frame beam. The supports 15, thus, take up and transfer a substantial part of the forces arising during the limbing operation on the frame beams 8.

At the end of each frame beam 8 a rocker arm 17 is pivotally mounted by means of a pin 16, at the other end of which arm a drive roll 19 provided with a hydraulic rotary motor 19a
of its own is attached by means of a pin 18. Between the ends
of every rocker arm a link 20 is hingedly attached, which at
its other end is hingedly connected to a sleeve 21 located
movably on the hollow beam 6 of the body. For moving the
sleeve, a preferably double-acting hydraulic cylinder 22 is
provided. Upon movement of the sleeve 21 in the direction
marked by the arrow 23 in Fig. 1 the rocker arms 17 are
swung about their pins 16 in the direction to each other,
and thereby the drive or feed rolls 19 are applied to the
stem with equal force and each with a force so directed,
that it presses the stem inward against the body of the
unit. Hereby also the stem is prevented effectively from
disengaging with the drive rolls 19 applied to the stem.
In order to obtain this safe engagement, each pin 16 is
arranged so as to form an acute angle of the magnitude
30-60°, preferably 45°, to the plane extending through the
hollow beam 6 of the body and designated by 24 in Figs. 2
and 3, while the axis of rotation 25 of the associated drive
roll forms a less acute angle, for example 10-20°, prefer-
ably 15°, to said plane 24 than the associated pin 16. The
drive rolls 19 hereby always are applied to the stem part
remote from the body, irrespective of the tree diameter,
as also appears from Fig. 3. The stem thereby is pressed
against the body of the unit. The movable limbing knives 9
as well as the drive rolls 19 are arranged symmetrically
in relation to said plane 24, so that upon application or
attachment of the unit to a tree to be felled and limbed
the unit is centered relative to the tree, and its centre
will be located substantially in said plane 24, as also is
shown in Fig. 3. By suspending the drive rolls near the
supports 15 for the carrier arms 10 of the limbing knives,
the forces produced by the drive rolls at the feeding of
a tree stem  to a great extent will balance the forces
caused by the limbing knives. It is hereby gained that the
body can be designed more slender and thereby be given a
lighter weight than otherwise would be the case.

The body 4 of the unit also comprises a casing or box beam
26 attached to the hollow beam 6, in which box beam a cross-
cutting member of the unit is located for felling a grabbed
tree and cross-cutting the same to intended lengths, and in
which a support roll 27 is provided in said plane 24, and
by which the unit is held in abutment to the stem being in
the unit. The cross-cutting member is shown in the Figures
in the form of a saw guide bar 28 with a saw chain 30 driven by a hydraulic motor 29. The guide bar 28 is capable, for
cross-cutting a tree, to be swung out of the box beam 26.
More precisely, at the embodiment shown by way of example
in Figs. 4 and 5, the guide bar 28 with its motor 29 is connected to a transverse piece or plate 31, which is supported
by two link arms 32 and 33, which are pivotally attached to
the box beam. The link arm 33 consists of a single arm located beneath the guide bar 28 and rotatably attached on a
pin 33a connected to the box beam 26 and a pin 33b connected
to the plate 31. The link arm 32 consists of two parts, one
located on the same level as the link arm 33, and the other
part located above the motor 29. Said two parts are attached
rotatably on a pin 32a connected to the box beam and on a
pin 32b connected to the plate 31, as shown in Fig. 5. Of
said link arms 32,33 one is hingedly connected to a hydraulic
cylinder 34 hingedly connected to the box beam 26 for swinging the guide bar outward for cutting off a tree, which outward swinging movement preferably is so controlled by means
of pressure-scanning transducers or the like, that the guide
bar is returned to the starting position protected in the box
beam 26, as shown in Fig. 4, directly after the tree has been
sawn off, which is scanned by the pressure-scanning member,
because the necessary feeding pressure thereby decreases.

The link arms 32 and 33 supporting the plate 31, on which the
saw guide bar is attached, are of equal length and their
joints 32b,33b at the plate 31 are located on both sides of the
guide bar 28 at a spaced relationship which is equal to or
greater than the distance between the joints 32a.32b of the link arms at the box beam 26. By this arrangement is achieved that the guide bar carries out a very favourable feeding movement with a relatively small angular displacement of the guide bar, and at the same time the feeding force exerted by the hydraulic cylinder 34 is at its greatest where it is required. In other words, the guide bar is arranged so that during its feeding movement it moves along an arcuate path, and at the same time is rotated through a predetermined angle in the direction of movement, i.e. counterclockwise in Fig. 4, and preferably so that the guide bar forms a substantially right angle with the vertical plane designated by 24 when it is in that portion of the arcuate path which is located closest to said plane 24. By such a feeding movement it is prevented to the greatest possible extent that the guide bar is jammed even in cases when the crane is not capable to lift the tree being felled.

The feeding movement of this guide bar can be effected also in many ways other than that shown in Figs. 4 and 5, for example by means of guide rails or grooves formed in agreement with the arcuate path. It also is possible within the scope of the present invention to position the guide bar pivotal about a fixed point, for example about the point designated in Fig. 4 by 40.

In Fig. 8 a slightly modified embodiment of the feeding mechanism of the cross-cutting member is shown which differs from the mechanism described above only in that the link arm 33 has curved shape, and that the piston-cylinder device 34 at one end is hingedly attached to the joint 22b of the link arm at the plate 31 and at its other end is hingedly connected to the box beam 26 substantially closer to the hollow beam 6 and support roll 27 than at the embodiment according to Fig. 4.

At the embodiment according to Figs. 6 and 7 the feed rolls or drive rolls 19 of the unit, each provided with a drive motor, are suspended in the same way as the drive rolls at the embodiment according to Figs. 1-3 each at a rocker arm
17, which arms are mounted pivotally each at the end of a
frame beam 8 by means of pins 16, which are retained in place
by means of securing plates screwn on the respective frame
beam 8. The two feed rolls are suspended identically and,
therefore, only one feed roll 19 and its suspension is shown
Figs. 6 and 7.

Between the ends of each rocker arm 17 a link 43 is attached
pivotally by means of a pin 42, which link in its turn is
hingedly connected to a guide arm 45 by means of a pin 44.
Said arm 45 is pivotally mounted at its end remote from the
link 43 on a pin 46, which is located at the end of a projection 47, which projects from the stand of the unit, for
example from its hollow beam 6, and is rigidly connected
therewith. A link arm 48 is hingedly attached to the guide
arm 45 between the ends thereof by means of a pin 49 extending through the guide arm 45 and the fork-shaped end of the
link arm, which end straddles the guide arm 48. The link arm
48 is at its other end pivotally mounted on a pin 50, which
is located at the end of a projection 51, which projects
from the sleeve 21 movable by means of the piston-cylinder
device 22 on the hollow beam 6 and is rigidly connected to
the sleeve.

This projection 51, like the projection 47, has such a length
and extension that their pins 50 and 46 are in parallel with
each other and with the remaining pins 16,42,44 and 49 and
are located in the same vertical plane, in which plane also
the remaining pins are located as well as the link arm 48, guide
arm 45, link 43 and rocker arm 17. The projection 51 further
carries its pin 50 on about the same level as the attachment point of the piston-cylinder device at the sleeve 21
and substantially aligned with said attachment point, as is
shown more clearly above all in Fig. 7. The pins can be held
in place by means of screwn securing plates 41, see pin 16,
or by means of bolt and washer, as shown e.g. for the pins
46 and 50.

In a similar way also the other feed roll 19 of the unit, which roll is not shown in Figs. 6 and 7, is suspended at the opposed side of the unit, and due to the fact, that the projections 51 carrying the link arms 48 via the pins 50 and connected to the sleeve 21 are arranged symmetrically in relation to the attachment point of the piston-cylinder device at the sleeve 21, forces arising are distributed uniformly and thereby minimize the risk of pinching.

Upon upward movement of the sleeve 21, thus, the link arms 48 cause the guide arms 49 to pivot about their pins 46, and thereby the rocker arms 17 are caused via the links 43 to move the feed rolls to engagement with the tree stem and to apply the feed rolls against the stem with equal force and each with a force so directed that it presses the stem inward against the body of the unit. Hereby also the stem is prevented effectively from disengaging the applied feed rolls 19. At this embodiment the rotation axis of the feed rolls has the same angle to the plane 24 in Figs. 2 and 3 as at the embodiment according to Figs. 1-3, but the pivot pins 16,42,44,49,46,50 are arranged at an angle of $60^{\circ}$ to said plane. Other angles, of course, can be imagined without abandoning the invention idea.

The unit according to the invention operates as follows. In the starting position the body is held in the position shown in Fig. 1. The unit can thereby be applied "upright" to a tree to be felled, after the unit by means of the rotator 2 had been turned so that the desired felling direction has been obtained. The unit is applied first with its stationary limbing knife 7 to the tree, whereafter the movable limbing knives 9 are pivoted inward and against the tree for drawing the unit inward against the tree. After the unit has been lowered to a suitable level, the drive rolls 17 are applied to the tree. The saw chain 30 can then be started and the guide bar 28 be swung outward for separating the tree from the stump. In order to prevent pinching in this connection, the crane boom 1 can be lifted whereby the pivot point 5 is subjected to an upward directed force, which gives rise to a tilting moment in the predetermined felling direction of the tree. The saw cut is thereby so widened that pinching cannot occur. When the tree has been sawn through completely, the necessary feed pressure decreases, which is scanned by the said pressure-scanning transducers, which thereby attend to that the guide bar 28 immediately is returned to the starting position in the casing 26.

Due to the tilting moment applied in the aforesaid way, the tree is caused to fall in the intended felling direction, and as the unit is pivotal relative to the suspension arm 3, the unit follows along with the tree.

The tree thus felled, if desired, can be drawn to the machine whereafter the drive rolls are started for feeding the stem through the unit and thereby delimbing the same. The support roll 27, against which the stem is held pressed both by the drive rolls 19 and the limbing knives 9, and which, thus, is caused to rotate at the feeding of the stem, preferably is provided with a measuring mechanism, which indicates when the feed is to be stopped for cross-cutting the stem to the desired length by means of the guide bar 28. After the cross-cutting and the return of the guide bar to the starting position, the drive rolls 19 again are started for advancing a further length. This is repeated until the tree is entirely processed. As soon as the tree top has left the unit, the unit is swung upward by the springs (not shown) to the position shown in Fig. 1, and the unit is ready for being applied to the next tree to be felled.

The present invention is not restricted to the embodiments described above and shown in the drawings, but can be altered and modified in many different ways within the scope of the invention idea defined in the attached claims.

Claims

1.    A felling and processing unit, comprising cross-cutting
members for felling and cross-cutting trees, limbing members
for limbing felled trees,driven feed rolls for advancing
felled trees through the unit, and suspension means for
suspending the unit on the boom of a forest crane via a
hinge means permitting rotation of the unit relative to the
boom, c h a r a c t e r i z e d   i n   that at least the
limbing members (9) are arranged as grapple members for fixing the unit on the tree to be felled, and that the unit is
pivotal relative to said suspension means (3) about a substantially horizontal axle (5) to follow along with the tree
at its felling.

2.    A unit as defined in claim 1, c h a r a c t e r i z e d
i n   that also the drive rolls (19) are arranged as grapple
members for fixing the unit at the tree to be felled.

3.    A unit as defined in claim 1 or 2, c h a r a c t e r -
i z e d   i n   that the drive rolls (19) are suspended
between the limbing members (7,9) and the cross-cutting members (28,29) each on a pivotal arm (17), which via a guide
link (20) is connected to a sleeve (21), which by means of
a hydraulic cylinder (22) is movable along a hollow beam
(6) comprised in the unit for moving the drive rolls (19)
away from and toward each other.

4.    A unit as defined in claim 3, c h a r a c t e r i z e d
i n   that the pivotal arms (17) carrying the drive rolls
(19) are located each on one side of a feed plane (24) and
are suspended each on a pin (16), which forms an acute angle
with said feed plane (24), and that the rotation axis (25)
of the respective drive roll also forms an acute angle with
said plane (24).

5.    A unit as defined in claim 4, c h a r a c t e r i z e d
i n   that the rotation axis (25) of the drive rolls form
a more acute angle with said plane (24) than the pins (16),
on which the arms (17) carrying the drive rolls (19) are
pivotally suspended.

11

6.  A unit as defined in any one of the preceding claims 3-5,
c h a r a c t e r i z e d   i n   that the arms (17) carrying
the drive rolls are suspended near supports (15) for pivotal
carrier arms (10), which carry movable limbing kniv-s (9) of
the unit.

7.  A unit as defined in any one of the preceding claims
3-6, c h a r a c t e r i z e d   i n   that said pins (16)
are located at the ends of frame beams (8) projecting from
the hollow beam.

8.  A unit as defined in claim 7, c h a r a c t e r i z e d
i n   that said frame beams (8) are provided on their upper
surface with said supports (15) for the carrier arms (10)
carrying the limbing members.

9.  A unit as defined in any one of the preceding claims,
at which the cross-sutting member is a guide bar provided
with a driven saw chain, c h a r a c t e r i z e d   i n
that the guide bar (28) is capable during its feed movement
for separating a tree to move along an arcuate path and simultaneously to rotate through a certain angle in the feed
direction.

10. A unit as defined in any one of the preceding claims,
c h a r a c t e r i z e d   i n   that the suspension means
consists of an arm (3), which is hingedly attached to the
unit, and in relation to which the unit is pivotal through
at least 90$^{\circ}$ and preferably more than 180$^{\circ}$.

# FIG.1

FIG.2

FIG:3

18

26

25

19a

19

24

27

25

19

18

19a

FIG.4

FIG.5

5/6

# FIG.6

## FIG.7

## FIG.8

European Patent
Office

**EUROPEAN SEARCH REPORT**

Application number

| | DOCUMENTS CONSIDERED TO BE RELEVANT | | EP 82850127.0 | |
|---|---|---|---|---|
| Category | Citation of document with indication, where appropriate, of relevant passages | Relevant to claim | CLASSIFICATION OF THE APPLICATION (Int. Cl. ³) | |
| A | <u>US - A - 3 797 539</u> (MOSER)<br>  * Fig. 3-6; column 2, lines 2-24; column 2, line 58 - column 3, line 35; column 4, lines 1-23 *<br>-- | 1,2,3 | A 01 G 23/08 | |
| A | <u>US - A - 4 194 542</u> (ERIKSSON)<br>  * Fig. 1; abstract *<br>-- | 1 | | |
| A | <u>US - A - 4 083 463</u> (ERICSSON)<br>  * Fig. 1,2; column 1, line 40 - column 2, line 38 *<br>---- | 1,10 | | |
| | | | **TECHNICAL FIELDS<br>SEARCHED (Int. Cl. ³)**<br><br>A 01 G 23/00<br>B 27 L 1/00 | |

| X | The present search report has been drawn up for all claims | | |
|---|---|---|---|
| Place of search<br>VIENNA | Date of completion of the search<br>27-01-1983 | Examiner<br>FESSLER | |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82